# EUROPÄISCHE PATENTSCHRIFT

(11) **EP 3 821 154 B1**
(45) Veröffentlichungstag und Bekanntmachung des Hinweises auf die Patenterteilung: **07.09.2022**
(21) Anmeldenummer: 19737002.6
(22) Anmeldetag: 19.06.2019
(51) Int. Cl.: F16H 3/44, F16H 3/54

(54) **UNTER LAST SCHALTBARES GETRIEBE**
TRANSMISSION THAT CAN BE SHIFTED UNDER LOAD
TRANSMISSION COUPLABLE SOUS CHARGE

(30) Priorität: 13.07.2018 DE 102018117051
(43) Veröffentlichungstag der Anmeldung: 19.05.2021
(73) Patentinhaber: REVOLUTE GmbH, 34127 Kassel (DE)
(72) Erfinder: SCHLERETH, Daniel, 97702 Reichenbach (DE)
(74) Vertreter: Walther Bayer Faber Patentanwälte PartGmbB
(86) Internationale Anmeldenummer: PCT/EP2019/066238
(87) Internationale Veröffentlichungsnummer: WO 2020/011503

(56) Entgegenhaltungen:
- DE-A1-102014 006 145
- DE-T2- 69 716 861
- US-A1- 2004 180 752

## Beschreibung

Die Erfindung betrifft ein Getriebe mit einem Gehäuse, mit einer Eingangswelle zur Einkopplung einer mechanischen Leistung und mit einer Ausgangswelle zur Auskopplung der mechanischen Leistung, wobei die Drehzahl der Ausgangswelle gegenüber der Drehzahl der Eingangswelle in Schaltstufen und unter Last veränderbar ist, und mit zwei Planetenstufen aufweisend mehrere Komponenten wenigstens umfassend ein Sonnenrad, einen Planetensteg und ein Hohlrad, und wobei eine Leistungsverzweigung vorgesehen ist, die zur Verzweigung der einkoppelbaren mechanischen Leistung an wenigstens zwei verschiedene Komponenten der Planetenstufen ausgebildet ist, wobei Schaltelemente so eingerichtet sind, dass die Eingangswelle als Teil der Leistungsverzweigung mit den wenigstens zwei verschiedenen Komponenten der Planetenstufen mittels der Schaltelemente wahlweise in Eingriff bringbar ist; wobei eine erste Planetenstufe und eine zweite Planetenstufe eingerichtet sind, wobei das Hohlrad der ersten Planetenstufe und das Sonnenrad der zweiten Planetenstufe drehfest miteinander verbunden sind und ein Zwischenelement bilden, wobei die erste Planetenstufe und die zweite Planetenstufe ineinander liegend eingerichtet sind, und der Planetensteg der ersten Planetenstufe mittels einer ersten Kupplung mit der Eingangswelle verbunden ist.

### STAND DER TECHNIK

Bei der Konstruktion und dem Bau von modernen Getrieben wird das Ziel verfolgt, die Schaltstufen unter Last schalten zu können, was mit der Einrichtung von Schaltelementen wie Kupplungen und Freiläufen möglich wird. Generell ist es das Ziel bei der Konstruktion solcher Getriebe, kleine bauliche Abmaße zu realisieren, und beim Einsatz solcher Getriebe in Fahrzeugen wie beispielsweise Automobile müssen derartige Getriebe einen Leistungsdurchsatz von 100 kW oder sogar deutlich darüber ermöglichen. Durch den zunehmenden Einzug von Hybridantrieben in Fahrzeugen ist es dabei von besonderem Interesse, die axiale Baulänge der Getriebe zu minimieren, die sich in Erstreckungsrichtung der Eingangswelle ergibt, die zumeist auch der Erstreckungsrichtung der Ausgangswelle entspricht. Getriebe, die die vorstehend aufgeführten Eigenschaften aufweisen, umfassen als wesentliche Komponenten wenigstens eine Planetenstufe, wobei auch bekannt ist, mehrere Planetenstufen miteinander kombiniert auszuführen.

Beispielsweise offenbart die DE 10 2013 217 643 A1 ein Getriebe mit einem Gehäuse, mit einer Eingangswelle zur Einkopplung einer mechanischen Leistung und mit einer Ausgangswelle zur Auskopplung der mechanischen Leistung. Die Drehzahl der Ausgangswelle ist dabei gegenüber der Drehzahl der Eingangswelle in Schaltstufen auch unter Last veränderbar. Hierzu weist das Getriebe wenigstens eine Planetenstufe auf, die mehrere Komponenten umfasst wie beispielsweise ein Sonnenrad, einen Planetensteg und ein Hohlrad. Durch die Verwendung von Schaltelementen zur Beschaltung der Komponenten der Planetenstufen sind die Schaltstufen auch unter Last veränderbar, sodass der Leistungsdurchsatz durch das Getriebe zwischen Eingangswelle und Ausgangswelle ohne größere Unterbrechung auch beim Wechsel zwischen verschiedenen Schaltstufen aufrecht erhalten bleiben kann. Durch die Beschaltung der Komponenten der Planetenstufen mittels Schaltelementen kann wechselweise zwischen mehreren Schaltstufen hin und her geschaltet werden, das bekannt gewordene Getriebe weist jedoch noch größere Abmaße in Erstreckungsrichtung der Eingangswelle und der Ausgangswelle auf, da zwei Planetenstufen voreinander angeordnet sind.

Die DE 697 16 861 T2 offenbart ein Getriebe mit einem Gehäuse, mit einer Eingangswelle zur Einkopplung einer mechanischen Leistung und mit einer Ausgangswelle zur Auskopplung der mechanischen Leistung, wobei die Drehzahl der Ausgangswelle gegenüber der Drehzahl der Eingangswelle in Schaltstufen und unter Last veränderbar ist, und mit wenigstens einer Planetenstufe aufweisend mehrere Komponenten wenigstens umfassend ein Sonnenrad, einen Planetensteg und ein Hohlrad, und wobei eine Leistungsverzweigung vorgesehen ist, die zur Verzweigung der einkoppelbaren mechanischen Leistung an wenigstens zwei verschiedene Komponenten der Planetenstufe ausgebildet ist, wobei Schaltelemente so eingerichtet sind, dass die Eingangswelle als Teil der Leistungsverzweigung mit den wenigstens zwei verschiedenen Komponenten der Planetenstufe mittels der Schaltelemente wahlweise in Eingriff bringbar ist; wobei eine erste Planetenstufe und eine zweite Planetenstufe eingerichtet sind, wobei das Hohlrad der ersten Planetenstufe und das Sonnenrad der zweiten Planetenstufe drehfest miteinander verbunden sind und ein Zwischenelement bilden, wobei die erste Planetenstufe und die zweite Planetenstufe ineinander liegend eingerichtet sind.

### OFFENBARUNG DER ERFINDUNG

Aufgabe der Erfindung ist die Weiterbildung eines Getriebes, das kleine bauliche Abmaße aufweist und den Wechsel zwischen verschiedenen Schaltstufen unter Last ermöglicht. Zudem soll der Wirkungsgrad des Getriebes insbesondere in Hinblick auf die Verwendung von Schaltelementen möglichst optimiert werden.

Diese Aufgabe wird ausgehend von einem Getriebe gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass das Sonnenrad der ersten Planetenstufe mittels eines Freilaufes mit der Eingangswelle verbunden ist, und das Hohlrad der zweiten Planetenstufe mittels einer zweiten Kupplung mit der Eingangswelle verbunden ist.

Kerngedanke der Erfindung ist ausgehend von einer Verzweigung der über die Eingangswelle eingekoppelten Leistung auf wahlweise zwei verschiedene Komponenten der Planetenstufe, also beispielsweise auf das Sonnenrad und auf das Hohlrad, das Sonnenrad und den Planetensteg, auf das Hohlrad und auf den Planetensteg, wobei die Leistungsverzweigung die Leistung auch auf Komponenten von zwei Planetenstufen aufteilt. Die verschiedenen Komponenten im vorliegenden Sinne beschreiben damit Komponenten der zwei Planetenstufen, denen eine voneinander unterschiedliche Funktion zuordenbar ist. Erfindungsgemäß ist nunmehr das Sonnenrad der ersten Planetenstufe mittels eines Freilaufes mit der Eingangswelle verbunden, und der Planetensteg der ersten Planetenstufe ist mittels einer ersten Kupplung mit der Eingangswelle verbunden, und das Hohlrad der zweiten Planetenstufe ist mittels einer zweiten Kupplung mit der Eingangswelle verbunden. Damit ergeben sich einfache Wechsel zwischen den Schaltstufen, wobei der Wechsel auch unter Last mit sehr gutem Wirkungsgrad ausgeführt werden kann, da insbesondere keine Bremsen Verwendung finden müssen, die Energie dissipieren.

Dadurch ergibt sich eine hohe Anzahl von möglichen Schaltstufen, wobei die über die Eingangswelle bereitgestellte Leistung mit der Leistungsverzweigung auf die Komponenten der Planetenstufen mittels Schaltelemente aufschaltbar ist. Daher ist erfindungsgemäß die Kopplung der Eingangswelle als Teil der Leistungsverzweigung mit den wenigstens zwei verschiedenen Komponenten der wenigstens einen Planetenstufe mittels der Schaltelemente wahlweise lösbar ausgebildet.

Gemäß einem weiteren wesentlichen Aspekt der Erfindung sind weitere Schaltelemente so eingerichtet, dass wenigstens zwei verschiedene Komponenten der Planetenstufen mittels der Schaltelemente wahlweise lösbar am Gehäuse festsetzbar sind.

Damit sind jeweils zwei Schaltelemente mit einer gemeinsamen Komponente der Planetenstufen wie zum Beispiel dem Sonnenrad, dem Planetensteg oder dem Hohlrad der wenigstens einen Planetenstufen drehfest verbunden. Diese Bauweise ermöglicht es, die jeweilige Komponente entweder mit dem Gehäuse zu kuppeln, das heißt festzusetzen, oder mit der Leistungsverzweigung zu kuppeln und so mit der Eingangsdrehzahl anzutreiben. Diese Anordnung ermöglicht sehr viele Schaltstufen des Getriebes bei einer geringen Anzahl von Zahnrädern.

Die Beschaltung der Komponenten der Planetenstufen mit den Schaltelementen ist insbesondere so ausgeführt, dass wenigstens zwei verschiedene Komponenten der Planetenstufen jeweils einzeln mittels Schaltelemente einerseits mit der Eingangswelle koppelbar und andererseits mittels weiterer Schaltelemente mit dem Gehäuse koppelbar sind. Beispielsweise kann das Sonnenrad, der Planetensteg oder das Hohlrad über ein Schaltelement mit der Eingangswelle oder mit einem weiteren Schaltelement mit dem Gehäuse verbunden werden. Bei der Verbindung mit der Eingangswelle wird die Leistung der Eingangswelle auf die Komponente übertragen, bei dem Festsetzen der Komponente mit dem Gehäuse über das weitere Schaltelement wird die Komponenten in den Ruhezustand versetzt. Gemäß einem weiteren Aspekt ist mindestens eine Komponente der Planetenstufen mit der Ausgangswelle drehfest verbunden. Im Ergebnis ergibt sich eine Vielzahl von verschiedenen Schaltstufen durch die Übersetzungs- oder Untersetzungswirkung der Verzahnungen in den Planetenstufen zwischen der Eingangswelle und der Ausgangswelle, insbesondere wenn die Ausgangswelle mit einer Komponente der Planetenstufen fest verbunden ist, beispielsweise mit dem Planetensteg oder mit dem Hohlrad.

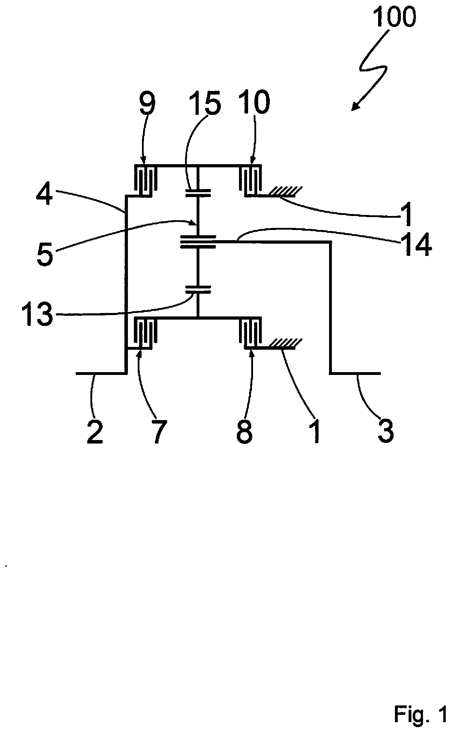

Die Schaltelemente weisen beispielsweise schaltbare Kupplungen oder Freiläufe auf. Mit besonderem Vorteil sind an einer einzigen Komponente der Planetenstufen kombiniert eine Kupplung und ein Freilauf angeordnet, sodass die diskrete Komponente der Planetenstufen entweder mit einer Kupplung oder mit einem Freilauf mit der Eingangswelle gekoppelt werden kann oder mit einer Kupplung oder mit einem Freilauf an dem Gehäuse des Getriebes festgesetzt werden kann. Ein Freilauf bildet dabei ein Schaltelement, das in einer ersten Drehrichtung eine Drehung zwischen den beiden Bauteilen des Freilaufes freigibt und in einer entgegengesetzten Drehrichtung blockiert. Im Ausführungsbeispiel in Figur 1 sind die Komponenten mit der Eingangswelle bevorzugt mittels Kupplungen verbunden, und die Komponenten sind mit dem Gehäuse vorzugsweise mittels Freiläufe verbunden.

Insbesondere können die mit der Eingangswelle in Verbindung stehenden Schaltelemente mit den mit dem Gehäuse in Verbindung stehenden Schaltelementen in Wechselwirkung stehen. Dabei können beispielsweise die Schaltelemente, die mit der Eingangswelle in Verbindung stehen, nur geöffnet werden, wenn zugleich die Schaltelemente geschlossen werden, die mit dem Gehäuse in Verbindung stehen. Auf gleiche Weise können die Schaltelemente, die mit der Eingangswelle in Verbindung stehen, geschlossen werden, und zugleich werden die Schaltelemente, die mit dem Gehäuse in Verbindung stehen, geöffnet. Das Öffnen und Schließen eines Schaltelementes, das mit einer diskreten Komponente der Planetenstufen verbunden ist, setzt beispielsweise immer das Schalten in eine gegenteilige Schaltstellung des weiteren Schaltelementes voraus, das mit derselben Komponente der Planetenstufen in Verbindung steht. Folglich ist es von besonderem Vorteil, wenn die in Wechselwirkung stehenden Schaltelemente jeweils mit einer gemeinsamen Komponente der Planetenstufen in Verbindung stehen.

Gemäß der Erfindung sind eine erste Planetenstufe und eine zweite Planetenstufe eingerichtet, wobei das Hohlrad der ersten Planetenstufe und das Sonnenrad der zweiten Planetenstufe drehfest miteinander verbunden sind und ein Zwischenelement bilden. Im Sinne der Erfindung können auch mehr als zwei Planetenstufen eingerichtet sein, die insbesondere über weitere Zwischenelemente miteinander in Verbindung stehen. Die Zwischenelemente bilden dabei insbesondere Elemente, die aus genau einer Komponente der mehreren Getriebestufen gemeinsam gebildet sind.

Um die axiale Baulänge des Getriebes zu minimieren, sind erfindungsgemäß die erste Planetenstufe, die zweite Planetenstufe und mögliche weitere Planetenstufen ineinander liegend eingerichtet, und/oder die mit der Eingangswelle in Verbindung stehenden Schaltelemente sind in einer Ebene ineinander liegend ausgebildet und/oder die mit dem Gehäuse in Verbindung stehenden Schaltelemente sind ineinander liegend ausgebildet. Auch dadurch, dass die Schaltelemente beispielsweise auf verschiedenen Durchmessern angeordnet und ausgebildet sind, und diese damit ineinander liegen können, wird die axiale Baulänge des Getriebes weiter reduziert. Insbesondere besteht vorteilhaft die Möglichkeit, die Schaltelemente auch in die axiale Länge der Komponenten der Getriebestufen zu integrieren, wodurch sich die axiale Länge des Getriebes weiter reduzieren lässt.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: ein erstes nicht zur Erfindung gehörendes Ausführungsbeispiel eines Getriebes mit einer Planetenstufe,
- Figur 2: ein weiteres nicht zur Erfindung gehörendes Ausführungsbeispiel eines Getriebes mit einer Planetenstufe,
- Figur 3: ein weiteres nicht zur Erfindung gehörendes Ausführungsbeispiel eines Getriebes mit einer Planetenstufe,
- Figur 4: ein erfindungsgemäßes Ausführungsbeispiel eines Getriebes mit zwei ineinander liegenden Planetenstufen,
- Figur 5: ein abgewandeltes nicht zur Erfindung gehörendes Ausführungsbeispiel eines Getriebes mit ineinander liegenden Planetenstufen,
- Figur 6: ein weiteres nicht zur Erfindung gehörendes Ausführungsbeispiel eines Getriebes mit ineinander liegenden Planetenstufen und
- Figur 7: das Ausführungsbeispiel eines Getriebes mit ineinander liegenden Planetenstufen gemäß Figur 4 mit der Einrichtung eines zusätzlichen Schaltelementes.

Figur 1 zeigt in schematischer Ansicht ein nicht zur Erfindung gehörendes Getriebe 100 mit einem Gehäuse 1, mit einer Eingangswelle 2 zur Einkopplung einer mechanischen Leistung und mit einer Ausgangswelle 3, die zur Auskopplung und damit zum Abgriff der mechanischen Leistung dient. Das Getriebe kann beispielsweise für ein Fahrzeug, insbesondere ein Automobil, ein Motorrad oder ein Fahrrad eingesetzt werden. Das Ausführungsbeispiel des Getriebes 100 weist eine einzige Planetenstufe 5 auf, umfassend ein Sonnenrad 13, einen Planetensteg 14 und ein Hohlrad 15.

Das Getriebe 100 verfügt in Verbindung mit der Eingangswelle 2 über eine Leistungsverzweigung 4, über die die Eingangswelle 2 mit einem ersten Schaltelement 7 und mit einem zweiten Schaltelement 9 in Verbindung gebracht ist. Das erste Schaltelement 7 steht mit dem Sonnenrad 13 und das zweite Schaltelement 9 steht mit dem Hohlrad 15 der Planetenstufe 5 in Verbindung. Die Schaltelement 7 und 9 sind beispielhaft als Kupplungen ausgeführt, sodass wahlweise oder gleichzeitig das Sonnenrad 13 und das Hohlrad 15 mit der Eingangswelle 2 verbindbar sind.

Das Sonnenrad 13 ist mit einem weiteren Schaltelement 8 mit dem Gehäuse 1 verbindbar, und das Hohlrad 15 ist mit einem noch weiteren Schaltelement 10 ebenfalls mit dem Gehäuse 1 verbindbar. Die Ausgangswelle 3 steht mit dem Planetensteg 14 in fester Verbindung. Die Schaltelemente 8 und 10 können mit Vorteil als Freiläufe ausgeführt sein. Die Schaltelemente 9 und 10 und die Schaltelemente 7 und 8 stehen jeweils in Wechselwirkung miteinander, sodass beispielsweise das Öffnen des ersten Schaltelementes 7, 9 ein Festsetzen des zweiten Schaltelementes 8, 10 mit dem Gehäuse 1 bewirkt, und andererseits können die Schaltelemente 7 und 9 geschlossen werden, wenn die Schaltelemente 8 und 10 in der Freigaberichtung betrieben werden.

Mit dem gezeigten Ausführungsbeispiel gemäß Figur 1 sind vier Schaltkombinationen mittels vier Schaltelementen 7, 8, 9 und 10 möglich. Hierdurch werden drei Vorwärtsgänge und eine Parkstellung realisiert.

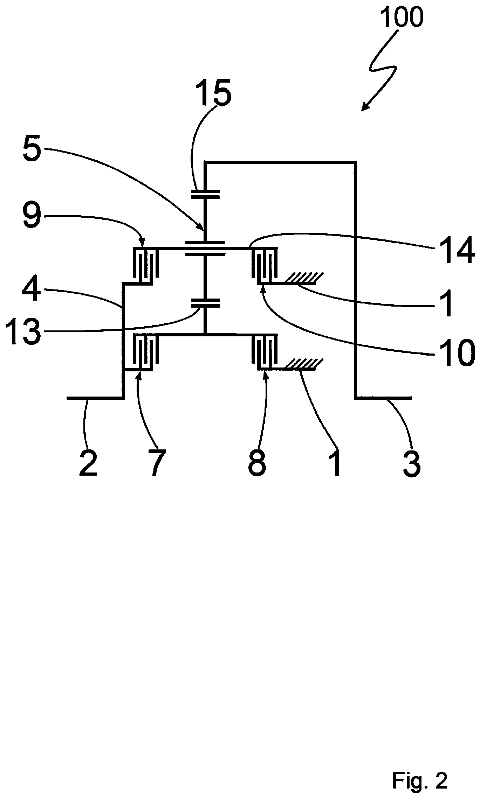

In Abwandlung zur Ausgestaltung eines Getriebes 100 gemäß Figur 1 zeigt Figur 2 ein weiteres nicht zur Erfindung gehörendes Ausführungsbeispiel eines Getriebes 100 mit einer Eingangswelle 2, mit einer Ausgangswelle 3 und mit den Schaltelementen 7, 9, die mit der Leistungsverzweigung 4 und damit mit der Eingangswelle 2 gekoppelt sind, und die Schaltelemente 8 und 10 sind mit dem Gehäuse 1 gekoppelt. Die dargestellte Planetenstufe 5 weist ein Sonnenrad 13, ein Hohlrad 15 und einen Planetensteg 14 auf. Die Ausgangswelle 3 steht dabei in fester Verbindung mit dem Hohlrad 15 der Planetenstufe 5.

Die Leistungsverzweigung 4 bringt die Eingangswelle 2 in Verbindung mit dem Schaltelement 7 und mit dem Schaltelement 9, und das Schaltelement 7 ist in Verbindung gebracht mit dem Sonnenrad 13 und das Schaltelement 9 ist in Verbindung gebracht mit dem Planetensteg 14. Mit dem Schaltelement 8 kann das Sonnenrad 13 mit dem Gehäuse 1 festgesetzt werden und der Planetensteg 14 kann mit dem Schaltelement 10 ebenfalls mit dem Gehäuse 1 festgesetzt werden.

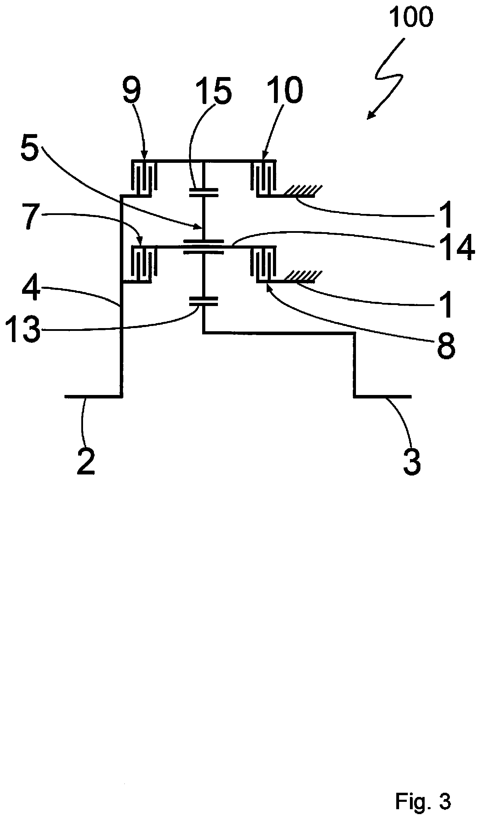

Figur 3 zeigt eine weitere Abwandlung des nicht zur Erfindung gehörenden Getriebes 100 mit einer Planetenstufe 5, wobei die Ausgangswelle 3 mit dem Sonnenrad 13 in fester Verbindung steht. Die weiteren Komponenten der Planetenstufe 5, umfassend den Planetensteg 14 und das Hohlrad 15 sind auf gleiche Weise mit den Schaltelementen 7, 8, 9 und 10 beschaltet wie auch in Figur 2 dargestellt.

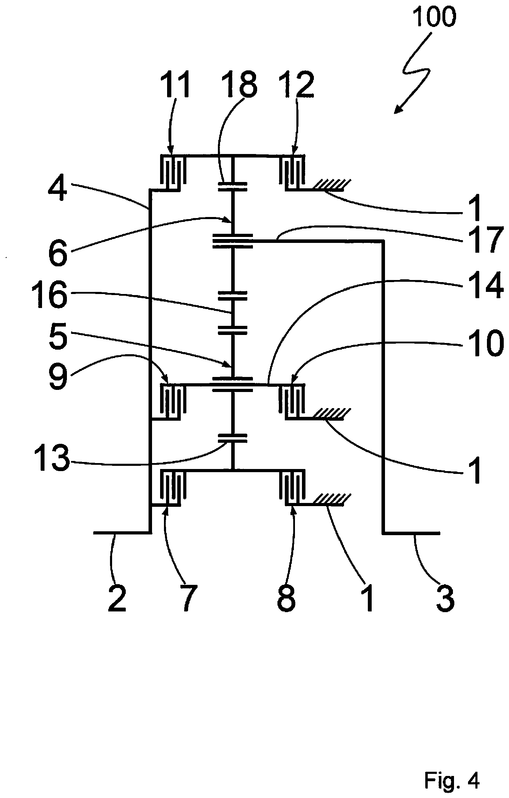

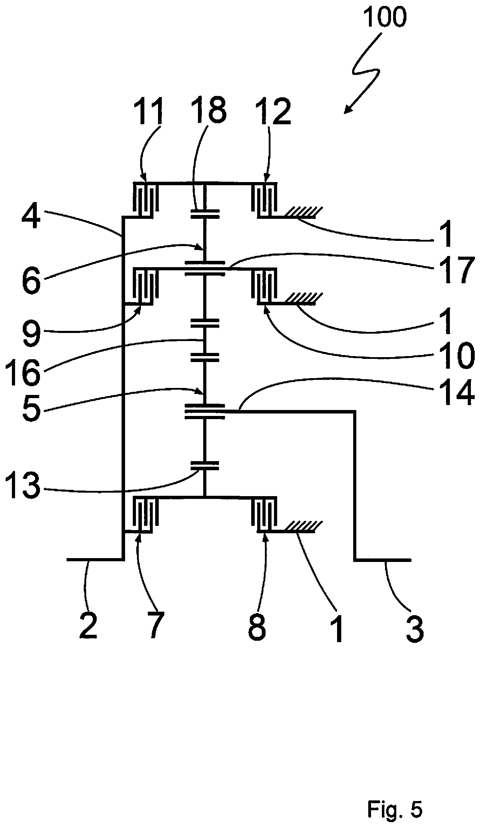

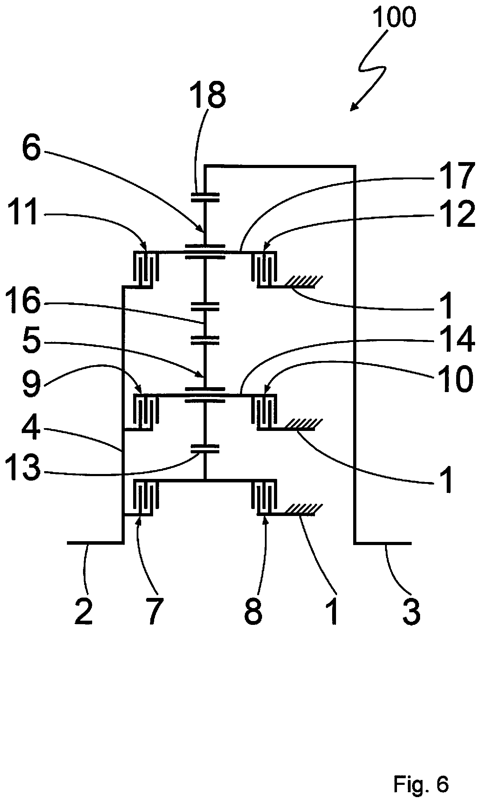

Die Figuren 4, 5, 6 und 7 zeigen weitere Ausführungsbeispiele eines Getriebes 100, wobei zunächst die den Ausführungsbeispielen gemeinsamen Merkmale beschrieben werden, und wobei die Getriebe 100 der Figuren 5 und 6 ebenfalls nicht zur Erfindung gehören.

Die Ausführungsbeispiele der Getriebe 100 weisen jeweils ein Gehäuse 1, eine Eingangswelle 2, eine Ausgangswelle 3 und eine Leistungsverzweigung 4 auf. Ein besonderes Merkmal der gezeigten Getriebe 100 besteht darin, dass diese eine erste Planetenstufe 5 und eine zweite Planetenstufe 6 aufweisen, und die Planetenstufen 5, 6 sind ineinander verschachtelt ausgebildet. Die Planetenstufe 5 weist ein Sonnenrad 13, einen Planetensteg 14 und ein Hohlrad auf, und das Hohlrad der Planetenstufe 5 kann einteilig ausgebildet mit einem Sonnenrad der Planetenstufe 6 sein, wodurch sich ein Zwischenelement 16 ergibt. Die Planetenstufe 6 weist einen Planetensteg 17 und ein Hohlrad 18 auf.

In Figur 4 ist die Eingangswelle 2 über die Leistungsverzweigung 4 mit dem Schaltelement 7 mit dem Sonnenrad 13 der ersten Planetenstufe 5 koppelbar, weiterhin ist über die Leistungsverzweigung 4 die Eingangswelle 2 mit dem Schaltelement 11 mit dem Hohlrad 18 der zweiten Planetenstufe 6 koppelbar. Des Weiteren ist die Eingangswelle 2 über die Leistungsverzweigung 4 mit dem Schaltelement 9 mit dem Planetenträger 14 der ersten Planetenstufe 5 koppelbar.

Auf der Seite des Gehäuses 1 ist das Sonnenrad 13 der ersten Planetenstufe 5 mit dem Schaltelement 8 mit dem Gehäuse 1 koppelbar, weiterhin ist das Hohlrad 18 der zweiten Planetenstufe 6 mittels des Schaltelementes 12 mit dem Gehäuse 1 koppelbar und der Planetenträger 14 mit dem Schaltelement 10 mit dem Gehäuse 1 koppelbar.

Die Planetenstufen 5 und 6 sind ineinander verschachtelt ausgebildet und diese können auf einer Ebene ineinander liegen und sind mit dem Zwischenelement 16 miteinander gekoppelt. Die Schaltelemente 7, 9 und 11 können in einer gemeinsamen Ebene ineinander verschachtelt angeordnet sein, und die Schaltelemente 8, 10 und 12 können ebenfalls in einer weiteren parallel ausgebildeten Ebene ineinander verschachtelt angeordnet sein. Die Schaltelemente 7, 9 und 11 befinden sich dabei in Verbindung mit der Leistungsverzweigung 4 und damit mit der Eingangswelle 2, und die Schaltelemente 8, 10 und 12 befinden sich in Verbindung mit dem Gehäuse 1. Folglich können die Schaltelemente 7, 9 und 11 auf einer ersten Seite der Komponenten der Planetenstufe 5 und 6 ausgebildet sein, und die Schaltelemente 8, 10 und 12 können auf einer gegenüberliegenden Seite der Komponenten der Planetenstufe 5 und 6 ausgebildet sein. Die Komponenten betreffen dabei insbesondere das Sonnenrad 13, den Planetensteg 14 und das Hohlrad 18. Dieses Ausführungsbeispiel ermöglicht 8 Schaltstellungen woraus 6 Vorwärtsgänge, ein Rückwärtsgang und eine Parkstellung resultieren.

Figur 5 zeigt ein nicht zur Erfindung gehörendes Ausführungsbeispiel, bei dem die Ausgangswelle 3 in Verbindung steht mit dem Planetensteg 14 der ersten Planetenstufe 5.

Gemäß Figur 6 ist ein nicht zur Erfindung gehörendes Ausführungsbeispiel gezeigt, bei dem die Ausgangswelle 3 mit dem Hohlrad 18 der zweiten Planetenstufe 6 in Verbindung steht.

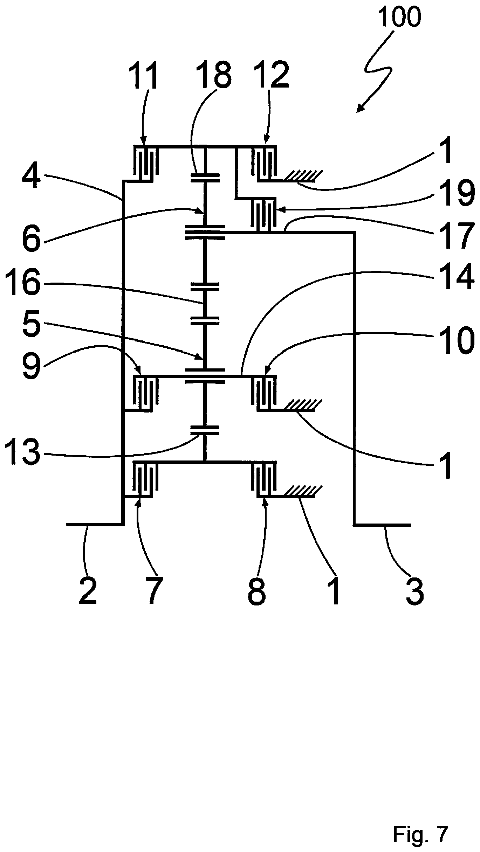

Figur 7 zeigt ein erfindungsgemäßes Ausführungsbeispiel, bei dem die Ausgangswelle 3 mit dem Planetensteg 17 in Verbindung steht, und der Planetensteg 17 ist mit einem weiteren Schaltelement 19 mit dem Hohlrad 18 verbindbar. Das weitere Schaltelement 19 ist beispielsweise als eine Kupplung ausgeführt, wodurch je nach Übersetzung der Planetenstufen 5, 6 bis zu zehn Schaltstellungen ermöglicht werden. Je nach gewählter Übersetzung der Planetensätze 5 und 6 können bis zu 7 Vorwärtsgänge, zwei Rückwärtsgänge und eine Parkstellung erzeugt werden.

Sind die Schaltelemente 7 bis 12 als Kupplungen ausgeführt, so können diese bevorzugt elektrohydraulisch oder elektromechanisch angesteuert werden, wobei die Kupplungen bevorzugt als trockene oder nasse Lamellenkupplung ausgeführt sein können. Die Freiläufe bilden hingegen ein Schaltelement, das einen Freilauf in einer ersten relativen Verdrehrichtung der beiden Komponenten zueinander ermöglicht, und in einer entgegengesetzten Drehrichtung findet ein Momentenschluss zwischen den beiden Komponenten statt. Durch schaltbare Freiläufe kann die jeweilige Komponente anschließend in beide relative Drehrichtungen gesperrt werden.

Der erfindungsgemäße Aufbau des Getriebes 100 ermöglicht das Ansteuern der jeweils gegenüberliegenden Schaltelemente 7 bis 12, die gepaart mit jeweils genau einer Komponente der Planetenstufen 5, 6 verbunden sind, sodass mit den Schaltelementen 7 bis 12 die diskrete Komponente der Planetenstufen 5, 6 sowohl mit der Antriebsseite, insbesondere mit der Eingangswelle 2 verbunden werden kann, als auch mit dem Gehäuse festgesetzt werden kann. Insbesondere die Ausführungsbeispiele in Figur 1, 4, 7 des erfindungsgemäßen Getriebes 100 haben den Vorteil, dass je nach Schaltstellung der Schaltelemente 7 bis 12 aufgrund der Leistungsverzweigung 4 das an den einzelnen Komponenten der Planetenstufen 5, 6 und den Schaltelementen 7 bis 12 anliegende Drehmoment gegenüber dem Ausgangsdrehmoment reduziert ist. Ebenfalls sind je nach Schaltstellung die Relativdrehzahlen der einzelnen Komponenten der Planetenstufen zum Teil deutlich reduziert oder sogar gleich 0, wodurch ein hoher Verzahnungswirkungsgrad erzielt werden kann.

Die Schaltelemente 7 bis 12 sind insbesondere lastschaltbar ausgeführt, und diese können als Kupplungen oder Bremsen, insbesondere Lamellenkupplungen und Lamellenbremsen, ausgeführt sein. Des Weiteren können einzelne Schaltelemente 7 bis 12 zur Reduzierung der Schleppmomente auch aus Freiläufen oder schaltbare Freiläufen ausgeführt werden. Schaltbare Freiläufe können hierbei je nach Schaltstellung in einer beliebigen Drehrichtung sperren, mit der Eingangswelle 2 oder mit dem Gehäuse 1 festgesetzt sein oder beide Drehrichtungen können freigegeben werden. Ebenso können Klauenkupplungen beziehungsweise Klauenbremsen eingesetzt werden. Für einen möglichen Anwendungsfall in Fahrrädern oder in Fahrrädern mit elektrischer Unterstützung können einzelne Schaltelemente 7 bis 12 auch als Schaltklinken ausgeführt sein, um den Bauraum und das Gewicht weiter zu verringern.

Durch die erfindungsgemäßen Ausführungsformen des Getriebes 100 können die Schaltstufen bei einer hohen Leistungsdichtung unter Last geschaltet werden. In der Folge eignet sich das Getriebe 100 besonders für jegliche Anwendungen, welche ein Schalten unter Last bei geringem Gewicht und geringer Baugröße erfordern.

Prinzipiell kann eine schaltbare Komponente der Planetenstufen 5 und/oder 6 oder von weiteren Planetenstufe einen weiteren Leistungseingang darstellen und drehfest oder koppelbar mit einer Leistungsquelle, beispielsweise einem Elektromotor, verbunden sein. In einem weiteren Anwendungsbeispiel ist die Komponente mit der Leistungsverzweigungseinheit koppelbar und wahlweise direkt mit einer weiteren Leistungsquelle, beispielsweise einem Elektromotor, drehfest verbunden oder über ein weiteres Schaltelement koppelbar. Eine solche Hybridanordnung ermöglicht es, die Drehzahl einer Verbrennungskraftmaschine dynamisch und stufenlos mit Hilfe des Elektromotors zu regeln. Ebenso ist ein rein elektrisches Anfahren oder sogar ein rein elektrisches Fahren möglich. Ein solches Getriebe 100 vereint damit die Vorteile und Eigenschaften eines eCVT-Getriebes mit einem mehrstufigen Getriebe gemäß der Erfindung.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste:

- 100: Getriebe

- 1: Gehäuse
- 2: Eingangswelle
- 3: Ausgangswelle
- 4: Leistungsverzweigung
- 5: Planetenstufe
- 6: Planetenstufe
- 7: Schaltelement, Freilauf
- 8: Schaltelement, Kupplung
- 9: Schaltelement, Kupplung
- 10: Schaltelement
- 11: Schaltelement
- 12: Schaltelement
- 13: Sonnenrad
- 14: Planetensteg
- 15: Hohlrad
- 16: Zwischenelement
- 17: Planetensteg
- 18: Hohlrad
- 19: Schaltelement

## Patentansprüche

1. Getriebe (100) mit einem Gehäuse (1), mit einer Eingangswelle (2) zur Einkopplung einer mechanischen Leistung und mit einer Ausgangswelle (3) zur Auskopplung der mechanischen Leistung, wobei die Drehzahl der Ausgangswelle (3) gegenüber der Drehzahl der Eingangswelle (2) in Schaltstufen und unter Last veränderbar ist, und mit zwei Planetenstufen (5, 6) aufweisend mehrere Komponenten wenigstens umfassend ein Sonnenrad (13), einen Planetensteg (14, 17) und ein Hohlrad (15, 16, 18), und wobei
- eine Leistungsverzweigung (4) vorgesehen ist, die zur Verzweigung der einkoppelbaren mechanischen Leistung an wenigstens zwei verschiedene Komponenten der Planetenstufen (5, 6) ausgebildet ist,
- wobei Schaltelemente (7, 9, 11) so eingerichtet sind, dass die Eingangswelle (2) als Teil der Leistungsverzweigung (4) mit den wenigstens zwei verschiedenen Komponenten der Planetenstufen (5, 6) mittels der Schaltelemente (7, 9, 11) wahlweise in Eingriff bringbar ist;
wobei eine erste Planetenstufe (5) und eine zweite Planetenstufe (6) eingerichtet sind, wobei das Hohlrad der ersten Planetenstufe (5) und das Sonnenrad der zweiten Planetenstufe (6) drehfest miteinander verbunden sind und ein Zwischenelement (16) bilden, wobei
- die erste Planetenstufe (5) und die zweite Planetenstufe (6) ineinander liegend eingerichtet sind, und
- der Planetensteg (14) der ersten Planetenstufe (5) mittels einer ersten Kupplung (9), insbesondere einer Schaltklinke, mit der Eingangswelle (2) verbunden ist,
**dadurch gekennzeichnet, dass**
- das Sonnenrad (13) der ersten Planetenstufe (5) mittels eines Freilaufes (7) mit der Eingangswelle (2) verbunden ist, und
- das Hohlrad (18) der zweiten Planetenstufe (6) mittels einer zweiten Kupplung (11), insbesondere einer Schaltklinke, mit der Eingangswelle (2) verbunden ist.

2. Getriebe (100) nach Anspruch 1,
**dadurch gekennzeichnet,**
**dass** weitere Schaltelemente (8, 10, 12) eingerichtet sind, mit denen wenigstens zwei verschiedene Komponenten der Planetenstufe (5, 6) wahlweise am Gehäuse (1) festsetzbar sind.

3. Getriebe (100) nach Anspruch 1 oder 2,
**dadurch gekennzeichnet,**
**dass** wenigstens zwei verschiedene Komponenten der Planetenstufe (5, 6) jeweils einzeln mittels der Schaltelemente (7, 9, 11) einerseits mit der Eingangswelle (2) und andererseits mittels der weiteren Schaltelemente (8, 10, 12) mit dem Gehäuse (1) koppelbar sind.

4. Getriebe (100) nach einem der Ansprüche 1 bis 3,
**dadurch gekennzeichnet,**
**dass** mindestens eine Komponente der Planetenstufe (5, 6) mit der Ausgangswelle (3) drehfest verbunden ist.

5. Getriebe (100) nach einem der vorgenannten Ansprüche,
**dadurch gekennzeichnet,**
**dass** die mit der Eingangswelle (2) in Verbindung stehenden Schaltelemente (7, 9, 11) mit den mit dem Gehäuse (1) in Verbindung stehenden Schaltelementen (8, 10, 12) in Wechselwirkung stehen, sodass das mit der Eingangswelle (2) in Verbindung stehende Schaltelement (7, 9, 11) öffnet, wenn das mit dem Gehäuse (1) in Verbindung stehende Schaltelement (8, 10, 12) schließt.

6. Getriebe (100) nach Anspruch 5,
**dadurch gekennzeichnet,**
**dass** die mit der Eingangswelle (2) in Verbindung stehenden Schaltelemente (7, 9, 11) mit den mit dem Gehäuse (1) in Verbindung stehenden Schaltelementen (8, 10, 12) in Wechselwirkung stehen, sodass das mit der Eingangswelle (2) in Verbindung stehende Schaltelement (7, 9, 11) schließt, wenn das mit dem Gehäuse (1) in Verbindung stehende Schaltelement (8, 10, 12) öffnet.

7. Getriebe (100) nach einem der Ansprüche 5 oder 6,
**dadurch gekennzeichnet,**
**dass** in Wechselwirkung stehende Schaltelemente (7, 8, 9, 10, 11, 12) jeweils mit einer Komponente der Planetenstufe (5, 6) gemeinsam in Verbindung stehen.

## Claims

1. A transmission (100) having a housing (1), having an input shaft (2) for coupling in a mechanical power and having an output shaft (3) for decoupling the mechanical power, wherein the rotational speed of the output shaft (3) is variable with respect to the rotational speed of the input shaft (2) in shifting stages and under load, and having a plurality of components having two planetary stages (5, 6) and comprising a sun gear (13, a planetary spider (14, 17), and an annulus gear (15, 16, 18), and wherein
- a power split (4) is provided that is configured to split the couplable mechanical power to at least two different components of the planetary stages (5, 6):
- wherein shift elements (7, 9, 11) are set up such that, as part of the power split (4), the input shaft (2) can be selectively brought into engagement with the at least two different components of the planetary stages (5, 6) by means of the shift elements (7, 9, 11); wherein a first planetary stage (5) and a second planetary stage (6) are set up, with the annulus gear of the first planetary stage (5) and the sun gear of the second planetary stage (6) being rotationally fixedly connected to one another and forming an intermediate element (16); wherein
- the first planetary stage (5) and the second planetary stage (6) are set up as lying in one another; and
- the planetary spider (14) of the first planetary stage (5) is connected to the input shaft (2) by means of a first coupling (9), in particular a shift pawl,
**characterized in that**
- the sun gear (13) of the first planetary stage (5) is connected to the input shaft (2) by means of a freewheel clutch (7); and
- the annulus gear (18) of the second planetary stage (6) is connected to the input shaft (2) by means of a second coupling (11), in particular a shift pawl.

2. A transmission (100) in accordance with claim 1,
**characterized in that**
further shift elements (8, 10, 12) are set up by which at least two different components of the planetary stage (5, 6) can be selectively fixed to the housing (1).

3. A transmission (1) in accordance with claim 1 or claim 2,
**characterized in that**
at least two different components of the planetary stage (5, 6) are respectively couplable individually by means of the shift elements (7, 9, 11) to the input shaft (2), on the one hand, and by means of the further shift elements (8, 10, 12) to the housing (1), on the other hand.

4. A transmission (100) in accordance with one of the claims 1 to 3,
**characterized in that**
at least one component of the planetary stage (5, 6) is rotationally fixedly connected to the output shaft (3).

5. A transmission (100) in accordance with one of the preceding claims,
**characterized in that**
the shift elements (7, 9, 11) connected to the input shaft (2) are interdependent with the shift elements (8, 10, 12) connected to the housing (1) so that the shift element (7, 9, 11) connected to the input shaft (2) opens when the shift element (8, 10, 12) connected to the housing (1) closes.

6. A transmission (100) in accordance with claim 5,
**characterized in that**
the shift elements (7, 9, 11) connected to the input shaft (2) are interdependent with the shift elements (8, 10, 12) connected to the housing (1) so that the shift element (7, 9, 11) connected to the input shaft (2) closes when the shift element (8, 10, 12) connected to the housing (1) opens.

7. A transmission (100) in accordance with one of the claims 5 or 6,
**characterized in that**
interdependent shift elements (7, 8, 9, 10, 11, 12) are each jointly connected to a component of the planetary stage (5, 6).

## Revendications

1. Transmission (100) comportant un carter (1), un arbre d'entrée (2) servant à injecter une puissance mécanique et un arbre de sortie (3) servant à extraire la puissance mécanique, la vitesse de rotation de l'arbre de sortie (3) pouvant être modifiée par rapport à la vitesse de rotation de l'arbre d'entrée (2) en des rapports et sous charge, et comportant deux étages planétaires (5, 6) présentant plusieurs composants comprenant au moins un planétaire (13), un porte-satellites (14, 17) et une couronne (15, 16, 18), et dans laquelle
- un branchement de couple (4) est prévu, qui est conçu pour la division de la puissance mécanique injectable entre au moins deux composants différents des étages planétaires (5, 6),
- des éléments de changement de rapport (7, 9, 11) étant configurés de telle manière que l'arbre d'entrée (2), en tant que partie du branchement de couple (4), peut être amené en prise de manière sélective avec les au moins deux composants différents des étages planétaires (5, 6) au moyen des éléments de changement de rapport (7, 9, 11) ;
dans laquelle un premier étage planétaire (5) et un deuxième étage planétaire (6) sont configurés, la couronne du premier étage planétaire (5) et le planétaire du deuxième étage planétaire (6) étant reliés l'un à l'autre de manière solidaire en rotation et formant un élément intermédiaire (16),
- le premier étage planétaire (5) et le deuxième étage planétaire (6) étant configurés agencés l'un dans l'autre, et
- le porte-satellites (14) du premier étage planétaire (5) étant relié à l'arbre d'entrée (2) au moyen d'un premier accouplement (9), en particulier un cliquet,
**caractérisée en ce que**
- le planétaire (13) du premier étage planétaire (5) est relié à l'arbre d'entrée (2) au moyen d'une roue libre (7), et
- la couronne (18) du deuxième étage planétaire (6) est reliée à l'arbre d'entrée (2) au moyen d'un deuxième accouplement (11), en particulier un cliquet.

2. Transmission (100) selon la revendication 1,
**caractérisée en ce que**
d'autres éléments de changement de rapport (8, 10, 12) sont configurés, avec lesquels au moins deux composants différents de l'étage planétaire (5, 6) peuvent être fixés de manière sélective sur le carter (1).

3. Transmission (100) selon la revendication 1 ou 2,
**caractérisée en ce que**
au moins deux composants différents de l'étage planétaire (5, 6) peuvent être couplés respectivement individuellement d'une part à l'arbre d'entrée (2) au moyen des éléments de changement de rapport (7, 9, 11) et d'autre part au carter (1) au moyen des autres éléments de changement de rapport (8, 10, 12).

4. Transmission (100) selon l'une des revendications 1 à 3,
**caractérisée en ce que**
au moins un composant de l'étage planétaire (5, 6) est relié de manière solidaire en rotation à l'arbre de sortie (3).

5. Transmission (100) selon l'une des revendications précédentes,
**caractérisée en ce que**
les éléments de changement de rapport (7, 9, 11) en liaison avec l'arbre d'entrée (2) sont en interaction avec les éléments de changement de rapport (8, 10, 12) en liaison avec le carter (1), de telle sorte que l'élément de changement de rapport (7, 9, 11) en liaison avec l'arbre d'entrée (2) s'ouvre quand l'élément de changement de rapport (8, 10, 12) en liaison avec le carter (1) se ferme.

6. Transmission (100) selon la revendication 5,
**caractérisée en ce que**
les éléments de changement de rapport (7, 9, 11) en liaison avec l'arbre d'entrée (2) sont en interaction avec les éléments de changement de rapport (8, 10, 12) en liaison avec le carter (1), de telle sorte que l'élément de changement de rapport (7, 9, 11) en liaison avec l'arbre d'entrée (2) se ferme quand l'élément de changement de rapport (8, 10, 12) en liaison avec le carter (1) s'ouvre.

7. Transmission (100) selon l'une des revendications 5 ou 6,
**caractérisée en ce que**
des éléments de changement de rapport (7, 8, 9, 10, 11, 12) en interaction sont respectivement conjointement en liaison avec un composant de l'étage planétaire (5, 6).
